# EUROPÄISCHE PATENTSCHRIFT

(11) **EP 3 938 671 B1**
(45) Veröffentlichungstag und Bekanntmachung des Hinweises auf die Patenterteilung: **10.07.2024**
(21) Anmeldenummer: 20723287.7
(22) Anmeldetag: 09.04.2020
(51) Int. Cl.: F16D 3/62

(54) **ANTRIEBSSTRANG EINES SCHIENENFAHRZEUGS**
DRIVE TRAIN OF RAILWAY VEHICLE
CHAÎNE CINÉMATIQUE D'UN VÉHICULE FERROVIAIRE

(30) Priorität: 23.04.2019 DE 102019205768
(43) Veröffentlichungstag der Anmeldung: 19.01.2022
(73) Patentinhaber: Siemens Mobility GmbH, 81739 München (DE)
(72) Erfinder: ZÄCH, Martin, 83064 Raubling (DE)
(74) Vertreter: Siemens Patent Attorneys
(86) Internationale Anmeldenummer: PCT/EP2020/060199
(87) Internationale Veröffentlichungsnummer: WO 2020/216633

(56) Entgegenhaltungen:
- EP-A2- 0 596 287
- EP-A2- 2 626 579
- DE-A1- 102004 039 796
- DE-A1- 102014 014 490
- DE-A1- 102014 018 842
- FR-A- 1 476 687

## Beschreibung

Die Erfindung betrifft einen Antriebsstrang eines Schienenfahrzeugs mit einer ersten Antriebsseite und einer zweiten Antriebsseite und mit einer Anordnung zur Verbindung der zwei Antriebsseiten.

Bei einem Antriebsstrang eines Schienenfahrzeugs werden Kupplungen verwendet, um Momente eines Antriebs zu übertragen. Zugleich werden Kupplungen dazu benötigt, um Relativwege und Relativwinkel zwischen Komponenten des Antriebsstrangs zuzulassen.

Dabei werden an alle Komponenten des Antriebsstrangs hohe Anforderungen sowohl an Steifigkeit als auch an Dämpfung gestellt.

Dabei beschreibt die Steifigkeit einen Widerstand eines Körpers gegen eine elastische Verformung, die durch äußere Einwirkungen, wie Kraft oder Drehmoment, hervorgerufen wird.

Im Antriebsstrang sind insbesondere verwendete Kupplungen, die ggf. in Reihe geschaltet sind, bezüglich der Steifigkeit so auszulegen, dass unter anderem zur Vermeidung von Schäden und zum Verhindern von Antriebsschwingungen ein definierter Steifigkeitswert eingestellt wird.

Zur Realisierung einer geforderten Steifigkeit ist es bekannt, zwischen zwei in Serie geschalteten Kupplungen eine Zwischenwelle anzuordnen, die die beiden Kupplungen in axialer Richtung gesehen miteinander seriell axial bzw. in Reihe axial verbindet.

Dabei ist diese Zwischenwelle bevorzugt als längliches, zylinderförmiges Maschinenelement ausgebildet, mit dem Drehbewegungen und Drehmomente zwischen Teilen übertragen werden, die mit der Zwischenwelle fest verbunden sind.

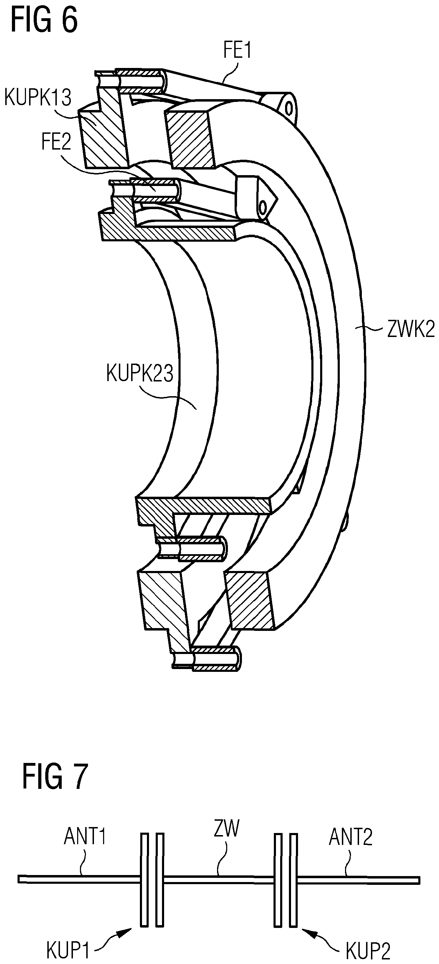

FIG 7 zeigt eine derartige Anordnung bzw. Reihenschaltung zweier Kupplungen KUP1, KUP2 mit einer Zwischenwelle ZW.

Eine erste Antriebsseite ANT1 ist über eine erste Kupplung KUP1 mit einer Zwischenwelle ZW verbunden. Entsprechend ist die Zwischenwelle ZW über eine zweite Kupplung KUP2 mit einer zweiten Antriebsseite ANT2 verbunden.

Die Zwischenwelle ZW ist hier länglich und zylinderförmig ausgebildet und überträgt Drehbewegungen und Drehmomente zwischen den beiden Antriebsseiten ANT1 und ANT2.

Durch eine gewählte Länge der Zwischenwelle ZW sowie durch weitere Gestaltungsparameter der Zwischenwelle ZW ist eine gewünschte Gesamtsteifigkeit und ein gewünschter Kupplungsweg der resultierenden Anordnung einstellbar. Nachteilig wird durch die Zwischenwelle ZW ein entsprechend großer Bauraum benötigt, der insbesondere bei einem Schienenfahrzeug nicht immer zur Verfügung steht.

Aus der DE 10 2014 014 490 A1 ist eine Kupplungsvorrichtung zum Verbinden eines Motors mit einem Getriebe eines Schienenfahrzeugs mit einer fadenverstärkten Gelenkvorrichtung, mit einem ersten Flansch, der dem Motor zugeordnet ist, und mit einem zweiten Flansch, der dem Getriebe 20 zugeordnet ist, bekannt. Die fadenverstärkte Gelenkvorrichtung koppelt den ersten Flansch und den zweiten Flansch.

Aus der EP 0 596 287 A2 ist eine Gelenkkupplung zur Übertragung einer Motorleistung von einer antreibenden Hohlwelle auf eine Treibachse bekannt.

Aus der EP 2 626 597 A2 ist eine elastische Doppel-Torsionskupplung bekannt.

Es ist die Aufgabe der vorliegenden Erfindung, eine Anordnung für eine Reihenschaltung von Ausgleichskupplungen anzugeben, die als Antriebsbestandteil eines Schienenfahrzeugs einsetzbar ist und die im Vergleich zum bekannten Stand der Technik einen geringeren Bauraum benötigt.

Diese Aufgabe wird durch einen Antriebsstrang mit den Merkmalen des Anspruchs 1 gelöst.

Vorteilhafte Weiterbildungen sind in den abhängigen Ansprüchen angegeben.

Beim erfindungsgemässen Antriebsstrang eines Schienenfahrzeugs werden eine erste und eine zweite Antriebsseite durch eine Anordnung verbunden.

Die erste Antriebsseite weist an einem ihrer Enden einen scheibenförmigen ersten Kupplungskörper auf. Die zweite Antriebsseite weist an einem ihrer Enden einen scheibenförmigen zweiten Kupplungskörper auf.

Zwischen dem ersten Kupplungskörper und dem zweiten Kupplungskörper ist ein scheibenförmiger Zwischenkörper angeordnet, wobei der Zwischenkörper sowohl mit dem ersten Kupplungskörper als auch mit dem zweiten Kupplungskörper gekoppelt ist.

Diese Kopplung ist derart ausgestaltet, dass eine Drehbewegung einer der beiden Antriebsseiten über die gekoppelten bzw. miteinander verbundenen scheibenförmigen Körper "erster Kupplungskörper - Zwischenkörper - zweiter Kupplungskörper" zur anderen Antriebsseite übertragen wird.

Dabei beschreibt der Begriff "scheibenförmig" geometrische Körper, deren Breite bzw. Höhe oder Durchmesser größer ist als deren Länge bzw. Tiefe - natürlich unter der Voraussetzung, dass der Zwischenkörper die oben genannte Funktion erfüllt.

Idealerweise umfasst der Begriff "scheibenförmig" einen geometrischen Körper mit einer Grundform eines Zylinders, dessen Radius (ggf. um ein Vielfaches) größer ist als seine Höhe.

In einer bevorzugten Ausgestaltung sind die Kupplungskörper und der Zwischenkörper durch ineinander verzahnte Noppen und Aussparungen miteinander gekoppelt.

In einer bevorzugten Ausgestaltung umschließt der erste Kupplungskörper den Zwischenkörper ringförmig. Entsprechend umschließt der Zwischenkörper den zweiten Kupplungskörper ringförmig. Mit anderen Worten sind die beiden Kupplungskörper ineinander verschachtelt angeordnet und weisen eine gemeinsame Symmetrieachse auf.

In einer bevorzugten Ausgestaltung weist der erste Kupplungskörper auf einer dem Zwischenkörper zugewandten Seite Mitnahme-Noppen auf. Entsprechend weist der zweite Kupplungskörper auf einer dem Zwischenkörper zugewandten Seite Mitnahme-Noppen auf. Der Zwischenkörper weist an einer dem ersten Kupplungskörper zugewandten Seite Aussparungen auf, die zur Aufnahme der Mitnahme-Noppen des ersten Kupplungskörpers ausgebildet sind. Der Zwischenkörper weist an einer dem zweiten Kupplungskörper zugewandten Seite Aussparungen auf, die zur Aufnahme der Mitnahme-Noppen des zweiten Kupplungskörpers ausgebildet sind.

Die jeweiligen Mitnahme-Noppen und Aussparungen sind derart miteinander gekoppelt, dass eine Drehbewegung einer der beiden Antriebsseiten über die gekoppelten Mitnahme-Noppen und Aussparungen zur anderen Antriebsseite übertragen wird.

In einer bevorzugten Ausgestaltung wird im Kopplungsbereich zusätzlich ein Elastomer als Zwischenmaterial aufgebracht bzw. verwendet.

In einer alternativen Ausgestaltung dazu sind die Kupplungskörper und der Zwischenkörper über flexible Elemente miteinander gekoppelt.

Bevorzugt dazu umschließt der erste Kupplungskörper den zweiten Kupplungskörper ringförmig, während auch der Zwischenkörper den zweiten Kupplungskörper ringförmig umschließt. Der Zwischenkörper ist bevorzugt und im Wesentlichen parallel zum ersten Kupplungskörper angeordnet.

Bevorzugt dazu ist der erste Kupplungskörper über flexible Elemente mit dem Zwischenkörper verbunden, während der Zwischenkörper ebenfalls über flexible Elemente mit dem zweiten Kupplungskörper verbunden ist.

Bevorzugt sind diese flexiblen Elemente streifenförmig ausgebildet.

Bevorzugt dazu weist der erste Kupplungskörper und der Zwischenkörper ringförmig umlaufend Aussparungen zur Aufnahme von flexiblen Elementen auf, durch die der erste Kupplungskörper mit dem Zwischenkörper verbunden ist.

Entsprechend weist der zweite Kupplungskörper und der Zwischenkörper ringförmig umlaufend Aussparungen zur Aufnahme von flexiblen Elementen auf, durch die der erste Kupplungskörper mit dem Zwischenkörper verbunden ist.

Durch die flexiblen Elemente erfolgt eine Kopplung bzw. Verbindung der Kupplungskörper und des Zwischenkörpers derart, dass eine Drehbewegung einer der beiden Antriebsseiten über die gekoppelten Elemente zur anderen Antriebsseite übertragen wird.

Die vorliegende Erfindung ermöglicht eine Reihenschaltung von Ausgleichskupplungen, die lediglich einen geringen axialen Bauraum benötigt. Dadurch können Antriebskonzepte sehr raumsparend bzw. platzsparend umgesetzt werden, was mit den aus dem Stand der Technik bislang bekannten Lösungen nicht erreichbar ist.

Durch die vorliegende Erfindung werden hinsichtlich Kosten und Gleiskräften Verbesserungen gegenüber dem bekannten Stand der Technik realisiert.

Zugleich wird durch die vorliegende Erfindung Gewicht eingespart und über das durch die Erfindung verbesserte Antriebskonzept wird eine verbesserte Fahrtechnik erreicht.

Die vorliegende Erfindung ermöglicht eine Reihenschaltung von Ausgleichskupplungen unter Einhaltung einer vorgegebenen Kupplungssteifigkeit.

Die vorliegende Erfindung schafft die Möglichkeit, einen grö-βere Steifigkeits- und Verformungsbereich der Kupplung zu nutzen.

Nachfolgend wird die vorliegende Erfindung beispielhaft anhand einer Zeichnung näher erläutert. Dabei zeigt:
- FIG 1: eine erste prinzipielle Darstellung der erfindungsgemäßen Anordnung,
- FIG 2: mit Bezug zu FIG 1 eine erste konkrete Ausgestaltung der erfindungsgemäßen Anordnung in einer QuerschnittDarstellung,
- FIG 3: eine zweite prinzipielle Darstellung der erfindungsgemäßen Anordnung,
- FIG 4: mit Bezug zu FIG 3 eine zweite konkrete Ausgestaltung der erfindungsgemäßen Anordnung in einer ersten Ansicht,
- FIG 5: mit Bezug auf FIG 4 die zweite konkrete Ausgestaltung in einer zweiten Ansicht,
- FIG 6: mit Bezug auf FIG 4 und FIG 5 die zweite konkrete Ausgestaltung in einer dritten Ansicht, und
- FIG 7: den vorstehend in der Einleitung beschriebenen Stand der Technik von in Reihe geschalteten Kupplungen.

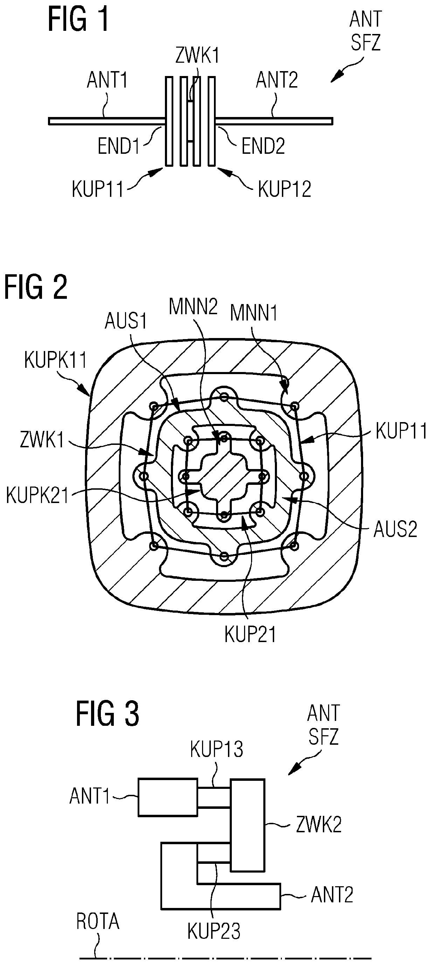

FIG 1 zeigt erste prinzipielle Darstellung der erfindungsgemäßen Anordnung.

Die gezeigte Anordnung ist zur Verbindung von zwei Antriebsseiten ANT1, ANT2 eines Antriebsstranges ANT eines Schienenfahrzeugs SFZ ausgebildet.

Eine erste Antriebsseite ANT1 ist über eine erste Kupplung KUP11 mit einem Zwischenkörper ZWK1 verbunden. Eine zweite Antriebsseite ANT2 ist über eine zweite Kupplung KUP21 mit dem Zwischenkörper ZWK1 verbunden.

Die gezeigten Kupplungen KUP11 und KUP21 sind ohne Verwendung einer Welle und damit platzsparend in axialer Richtung zueinander angeordnet.

FIG 2 zeigt mit Bezug zu FIG 1 eine erste konkrete Ausgestaltung der erfindungsgemäßen Anordnung in einer Querschnitt-Darstellung.

Die gezeigte Anordnung ist zur Verbindung von zwei Antriebsseiten ANT1, ANT2 eines Antriebsstranges ANT eines Schienenfahrzeugs SFZ ausgebildet.

Eine erste Antriebsseite ANT1 weist an einem Ende END1 und damit verbindungsseitig einen scheibenförmigen ersten Kupplungskörper KUPK11 auf.

Eine zweite Antriebsseite ANT2 weist an einem Ende END2 und damit verbindungsseitig einen scheibenförmigen zweiten Kupplungskörper KUPK21 auf.

Zwischen dem ersten Kupplungskörper KUPK11 und dem zweiten Kupplungskörper KUPK21 ist ein scheibenförmiger Zwischenkörper ZWK1 angeordnet.

Der erste Kupplungskörper KUPK11 umschließt den Zwischenkörper ZWK1 ringförmig. Der Zwischenkörper ZWK1 wiederum umschließt den zweiten Kupplungskörper KUPK21 ringförmig.

Der erste Kupplungskörper KUPK11 weist auf einer dem Zwischenkörper ZWK1 zugewandten Seite ringförmig umlaufend angeordnete Mitnahme-Noppen MNN1 auf, während der zweite Kupplungskörper KUPK21 auf einer dem Zwischenkörper ZWK1 zugewandten Seite ebenfalls ringförmig umlaufend angeordnete Mitnahme-Noppen MNN2 aufweist.

Der Zwischenkörper ZWK1 weist entsprechend an einer dem ersten Kupplungskörper KUPK11 zugewandten Seite ringförmig umlaufend angeordnet Aussparungen AUS1 auf, die zur Aufnahme der Mitnahme-Noppen MNN1 des ersten Kupplungskörpers KUPK11 ausgebildet sind.

Ebenfalls weist der Zwischenkörper ZWK1 an einer dem zweiten Kupplungskörper KUPK21 zugewandten Seite ringförmig umlaufend angeordnet Aussparungen AUS2 auf, die zur Aufnahme der Mitnahme-Noppen MNN2 des zweiten Kupplungskörpers KUPK12 ausgebildet sind.

Die jeweiligen Mitnahme-Noppen MNN1, MNN2 und Aussparungen AUS1, AUS2 sind derart miteinander gekoppelt, dass eine Drehbewegung einer der beiden Antriebsseiten ANT1, ANT2 über die gekoppelten Mitnahme-Noppen MNN1, MNN2 und Aussparungen AUS1, AUS2 zur anderen Antriebsseite übertragen wird.

Im Zusammenspiel der genannten Mitnahme-Noppen und Aussparungen wird die erste Kupplung KUP11 durch den ersten Kupplungskörper KUPK11 sowie durch den Zwischenkörper ZWK1 gebildet, während die zweite Kupplung KUP21 durch den zweiten Kupplungskörper KUPK21 sowie durch den Zwischenkörper ZWK1 gebildet wird.

Die gezeigten Kupplungskörper KUPK11 und KUPK21 sowie der Zwischenkörper ZWK1 sind platzsparend ineinander verschachtelt angeordnet und weisen eine gemeinsame Symmetrieachse auf.

FIG 3 zeigt eine zweite prinzipielle Darstellung der erfindungsgemäßen Anordnung.

Die gezeigte Anordnung ist zur Verbindung von zwei Antriebsseiten ANT1, ANT2 eines Antriebsstranges ANT eines Schienenfahrzeugs SFZ ausgebildet.

Eine erste Antriebsseite ANT1 ist über eine erste Kupplung KUP13 mit einem Zwischenkörper ZWK2 verbunden. Eine zweite Antriebsseite ANT2 ist über eine zweite Kupplung KUP23 mit dem Zwischenkörper ZWK2 verbunden.

Bei dieser Anordnung sind die beiden Kupplungen KUP13, KUP23 ohne Verwendung einer Welle radial versetzt, jedoch längs einer gemeinsamen Symmetrieachse ROTA und damit axial zueinander platzsparend angeordnet.

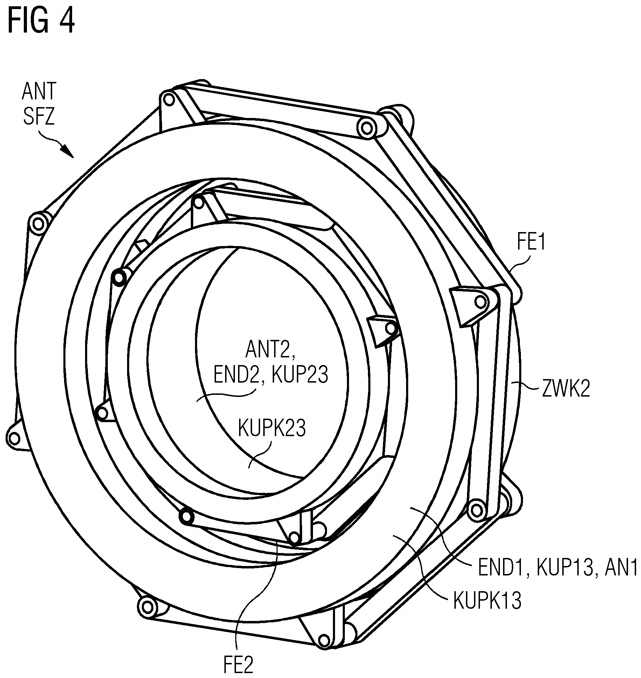

FIG 4 zeigt mit Bezug zu FIG 3 eine zweite konkrete Ausgestaltung der erfindungsgemäßen Anordnung in einer ersten Ansicht.

Auch diese Anordnung ist zur Verbindung von zwei Antriebsseiten ANT1, ANT2 eines Antriebsstranges ANT eines Schienenfahrzeugs SFZ ausgebildet.

Eine erste Antriebsseite ANT1 weist an einem Ende END1 und damit verbindungsseitig einen scheibenförmigen ersten Kupplungskörper KUPK13 auf.

Eine zweite Antriebsseite ANT2 weist an einem Ende END2 und damit verbindungsseitig einen scheibenförmigen zweiten Kupplungskörper KUPK23 auf.

Zusätzlich zum ersten Kupplungskörper KUPK13 und zum zweiten Kupplungskörper KUPK23 ist ein scheibenförmiger Zwischenkörper ZWK2 angeordnet.

Der erste Kupplungskörper KUPK13 umschließt den zweiten Kupplungskörper KUPK23 ringförmig.

Der Zwischenkörper ZWK2 ist hier im Wesentlichen parallel zum ersten Kupplungskörper KUPK13 angeordnet.

Der erste Kupplungskörper KUPK13 ist über streifenförmige flexible Elemente FE1 mit dem Zwischenkörper ZWK2 verbunden.

Der Zwischenkörper ZWK2 ist über streifenförmige flexible Elemente FE2 mit dem zweiten Kupplungskörper KUPK23 verbunden.

Der erste Kupplungskörper KUPK13 und der Zwischenkörper ZWK2 weisen ringförmig umlaufend Aussparungen (hier Bohrungen) auf, die zur Aufnahme der flexiblen Elemente FE1 dienen, durch die der erste Kupplungskörper KUPK13 mit dem Zwischenkörper ZWK2 verbunden ist.

Der zweite Kupplungskörper KUPK23 und der Zwischenkörper ZWK2 weisen ringförmig umlaufend Aussparungen (hier Bohrungen) zur Aufnahme der flexiblen Elementen FE2 auf, durch die der zweite Kupplungskörper KUPK23 mit dem Zwischenkörper ZWK2 verbunden ist.

Durch die flexiblen Elemente FE1, FE2 erfolgt eine Kopplung bzw. Verbindung der Kupplungskörper KUPK13, KUPK23 und des Zwischenkörpers ZWK2 derart, dass eine Drehbewegung einer der beiden Antriebsseiten ANT1, ANT2 über die gekoppelten Elemente zur anderen Antriebsseite übertragen wird.

Im Zusammenspiel der genannten Elemente wird die Funktionalität der ersten Kupplung KUP13 durch den ersten Kupplungskörper KUPK13, durch den Zwischenkörper ZWK2 sowie durch die flexiblen Elemente FE1 gebildet, während die Funktionalität der zweiten Kupplung KUP23 durch den zweiten Kupplungskörper KUPK23, durch den Zwischenkörper ZWK2 sowie durch die flexiblen Elemente FE2 gebildet wird.

Die gezeigten Kupplungskörper KUPK13, KUPK23 sowie der Zwischenkörper ZWK2 sind platzsparend ineinander verschachtelt angeordnet und weisen eine gemeinsame Symmetrieachse auf.

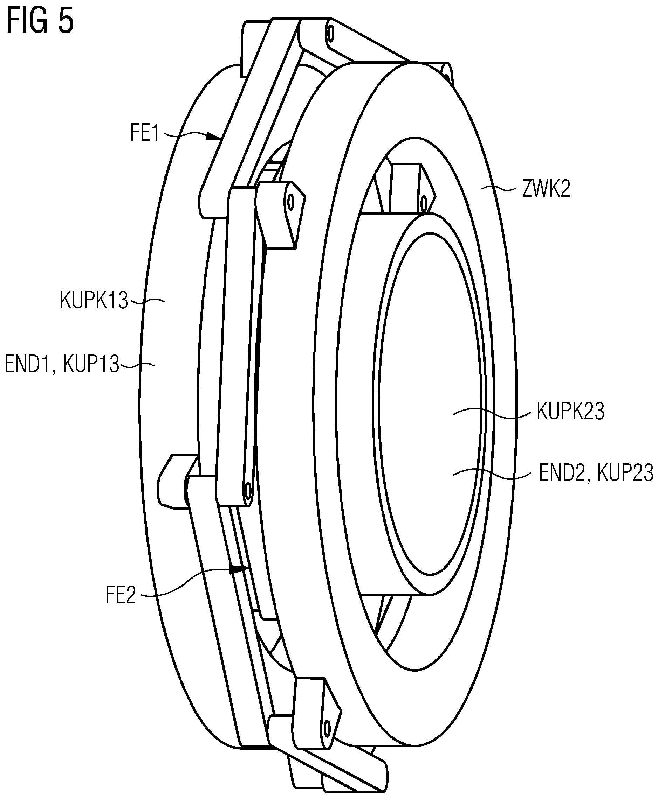

FIG 5 zeigt mit Bezug auf FIG 4 die zweite konkrete Ausgestaltung in einer zweiten Ansicht.

FIG 6 zeigt mit Bezug auf FIG 4 und FIG 5 die zweite konkrete Ausgestaltung in einer dritten Ansicht.

## Patentansprüche

1. Antriebsstrang (ANT) eines Schienenfahrzeugs mit einer ersten und mit einer zweiten Antriebsseite (ANT1, ANT2) und mit einer Anordnung zur Verbindung der ersten und der zweiten Antriebsseite (ANT1,ANT2),
- bei der die erste Antriebsseite (ANT1) an einem ihrer Enden (END1) einen scheibenförmigen ersten Kupplungskörper (KUPK11, KUPK13) aufweist,
- bei der die zweite Antriebsseite (ANT2) an einem ihrer Enden (END2) einen scheibenförmigen zweiten Kupplungskörper (KUPK21, KUPK23) aufweist,
- bei der zwischen dem ersten Kupplungskörper (KUPK11, KUPK13) und dem zweiten Kupplungskörper (KUPK21, KUPK23) ein scheibenförmiger Zwischenkörper (ZWK1, ZWK2) angeordnet ist,
- bei der der Zwischenkörper (ZWK1, ZWK2) sowohl mit dem ersten Kupplungskörper (KUPK11, KUPK13) als auch mit dem zweiten Kupplungskörper (KUPK21, KUPK23) derart gekoppelt ist, dass eine Drehbewegung einer der beiden Antriebsseiten (ANT1, ANT2) über die gekoppelten Körper (KUPK11, ZWK1, KUPK21, KUPK13, ZWK2, KUPK23) zur anderen Antriebsseite (ANT2, ANT1) übertragen wird,
- bei der der erste Kupplungskörper (KUPK11, KUPK13) den zweiten Kupplungskörper (KUPK21, KUPK23) ringförmig umschließt,
- bei der der Zwischenkörper (ZWK1, ZWK2) den zweiten Kupplungskörper (KUPK21, KUPK23) ringförmig umschließt,
- so dass der zweite Kupplungskörper (KUPK21, KUPK23) zum ersten Kupplungskörper (KUPK11, KUPK13) sowie zum Zwischenkörper (ZWK1, ZWK2) platzsparend ineinander verschachtelt angeordnet ist und diese Körper eine gemeinsame Symmetrieachse aufweisen.

2. Antriebsstrang nach Anspruch 1 wobei bei der Anordnung
- der erste Kupplungskörper (KUPK11) den Zwischenkörper (ZWK1) ringförmig umschließt.

3. Antriebsstrang nach Anspruch 1 oder 2, wobei bei der Anordnung die Kupplungskörper (KUPK11, KUPK21) und der Zwischenkörper (ZWK1) durch ineinander verzahnte Noppen (MNN) und Aussparungen (AUS) miteinander gekoppelt sind.

4. Antriebsstrang nach Anspruch 3 wobei bei der Anordnung
- der erste Kupplungskörper (KUPK11) auf einer dem Zwischenkörper (ZWK1) zugewandten Seite Mitnahme-Noppen (MNN1) aufweist,
- der zweite Kupplungskörper (KUPK21) auf einer dem Zwischenkörper (ZWK1) zugewandten Seite Mitnahme-Noppen (MNN2) aufweist,
- der Zwischenkörper (ZWK1) an einer dem ersten Kupplungskörper (KUPK11) zugewandten Seite Aussparungen (AUS1) aufweist, die zur Aufnahme der Mitnahme-Noppen (MNN1) des ersten Kupplungskörpers (KUPK11) ausgebildet sind,
- der Zwischenkörper (ZWK1) an einer dem zweiten Kupplungskörper (KUPK21) zugewandten Seite Aussparungen (AUS2) aufweist, die zur Aufnahme der Mitnahme-Noppen (MNN2) des zweiten Kupplungskörpers (KUPK21) ausgebildet sind,
- die jeweiligen Mitnahme-Noppen (MNN) und Aussparungen (AUS) derart miteinander gekoppelt sind, dass eine Drehbewegung einer der beiden Antriebsseiten (ANT1, ANT2) über die gekoppelten Mitnahme-Noppen (MNN) und Aussparungen (AUS) zur anderen Antriebsseite (ANT2, ANT1) übertragen wird.

5. Antriebsstrang nach Anspruch 4, wobei bei der Anordnung die Kupplungskörper (KUPK11, KUPK21) und der Zwischenkörper (ZWK1) über flexible Elemente miteinander gekoppelt sind.

6. Antriebsstrang nach Anspruch 1 wobei bei der Anordnung
- der Zwischenkörper (ZWK2) im Wesentlichen parallel zum ersten Kupplungskörper (KUPK13) angeordnet ist.

7. Antriebsstrang nach Anspruch 6 wobei bei der Anordnung
- der erste Kupplungskörper (KUPK13) über flexible Elemente (FE1) mit dem Zwischenkörper (ZWK2) verbunden ist,
- der Zwischenkörper (ZWK2) über flexible Elemente (FE2) mit dem zweiten Kupplungskörper (KUPK23) verbunden ist.

8. Antriebsstrang nach Anspruch 7 wobei bei der Anordnung
- die flexiblen Elemente (FE1, FE2) streifenförmig sind.

9. Antriebsstrang nach Anspruch 7 oder 8 wobei bei der Anordnung
- der erste Kupplungskörper (KUPK13) und der Zwischenkörper (ZWK2) ringförmig umlaufend Aussparungen zur Aufnahme der flexiblen Elemente (FE1) aufweist, durch die der erste Kupplungskörper (KUPK13) mit dem Zwischenkörper (ZWK2) verbunden ist, und
- der zweite Kupplungskörper (KUPK23) und der Zwischenkörper (ZWK2) ringförmig umlaufend Aussparungen zur Aufnahme der flexiblen Elemente (FE2) aufweist, durch die der zweite Kupplungskörper (KUPK23) mit dem Zwischenkörper (ZWK2) verbunden ist,
- durch die flexiblen Elemente (FE1, FE2) eine Kopplung bzw. Verbindung der Kupplungskörper (KUPK13,
- KUPK23) und des Zwischenkörpers (ZWK2) derart erfolgt, dass eine Drehbewegung einer der beiden Antriebsseiten (ANT1, ANT2) über die gekoppelten Elemente zur anderen Antriebsseite (ANT2, ANT1) übertragen wird.

## Claims

1. Drive train (ANT) of a rail vehicle with a first with a second drive side (ANT1, ANT2) and with an arrangement for connecting the first and the second drive side (ANT1, ANT2),
- in the case of which arrangement the first drive side (ANT1) has, at one of its ends (END1), a disc-shaped first coupling body (KUPK11, KUPK13),
- in the case of which arrangement the second drive side (ANT2) has, at one of its ends (END2), a disc-shaped first coupling body (KUPK21, KUPK23),
- in the case of which arrangement a disc-shaped intermediate body (ZWK1, ZWK2) is arranged between the first coupling body (KUPK11, KUPK13) and the second coupling body (KUPK21, KUPK23),
- in the case of which arrangement the intermediate body (ZWK1, ZWK2) is coupled both to the first coupling body (KUPK11, KUPK13) and to the second coupling body (KUPK21, KUPK23) in such a way that a rotational movement of one of the two drive sides (ANT1, ANT2) is transmitted via the coupling bodies (KUPK11, ZWK1, KUPK21, KUPK13, ZWK2, KUPK23) to the other drive side (ANT2, ANT1),
- in the case of which arrangement the first coupling body (KUPK11, KUPK13) encloses the second coupling body (KUPK21, KUPK23) in an annular manner,
- in the case of which arrangement the intermediate body (ZWK1, ZWK2) encloses the second coupling body (KUPK21, KUPK23) in an annular manner,
- with the result that the second coupling body (KUPK21, KUPK23) is arranged in a space-saving manner nested inside one another with respect to the first coupling body (KUPK11, KUPK13) and with respect to the intermediate body (ZWK1, ZWK2), and these bodies have a common axis of symmetry.

2. Drive train according to Claim 1, wherein, in the case of the arrangement,
- the first coupling body (KUPK11) encloses the intermediate body (ZWK1) in an annular manner.

3. Drive train according to Claim 1 or 2, wherein, in the case of the arrangement, the coupling bodies (KUPK11, KUPK21) and the intermediate body (ZWK1) are coupled to one another by way of cut-outs (AUS) and bumps (MNN) which are interlocked in one another.

4. Drive train according to Claim 3, wherein, in the case of the arrangement,
- the first coupling body (KUPK11) has driving bumps (MNN1) on a side which faces the intermediate body (ZWK1),
- the second coupling body (KUPK21) has driving bumps (MNN2) on a side which faces the intermediate body (ZWK1),
- the intermediate body (ZWK1) has, on a side which faces the first coupling body (KUPK11), cut-outs (AUS1) which are configured to receive the driving bumps (MNN1) of the first coupling body (KUPK11),
- the intermediate body (ZWK1) has, on a side which faces the second coupling body (KUPK21), cut-outs (AUS2) which are configured to receive the driving bumps (MNN2) of the second coupling body (KUPK21),
- the respective driving bumps (MNN) and cut-outs (AUS) are coupled to one another in such a way that the rotational movement of one of the two drive sides (ANT1, ANT2) is transmitted via the coupled driving bumps (MNN) and cut-outs (AUS) to the other drive side (ANT2, ANT1).

5. Drive train according to Claim 4, wherein, in the case of the arrangement, the coupling bodies (KUPK11, KUPK21) and the intermediate body (ZWK1) are coupled to one another via flexible elements.

6. Drive train according to Claim 1, wherein, in the case of the arrangement,
- the intermediate body (ZWK2) is arranged substantially parallel to the first coupling body (KUPK13).

7. Drive train according to Claim 6, wherein, in the case of the arrangement,
- the first coupling body (KUPK13) is connected via flexible elements (FE1) to the intermediate body (ZWK2),
- the intermediate body (ZWK2) is connected via flexible elements (FE2) to the second coupling body (KUPK23).

8. Drive train according to Claim 7, wherein, in the case of the arrangement,
- the flexible elements (FE1, FE2) are strip-shaped.

9. Drive train according to Claim 7 or 8, wherein, in the case of the arrangement,
- the first coupling body (KUPK13) and the intermediate body (ZWK2) have, in an annularly peripheral manner, cut-outs for receiving the flexible elements (FE1), by way of which the first coupling body (KUPK13) is connected to the intermediate body (ZWK2), and
- the second coupling body (KUPK23) and the intermediate body (ZWK2) have, in an annularly peripheral manner, cut-outs for receiving the flexible elements (FE2), by way of which the second coupling body (KUPK23) is connected to the intermediate body (ZWK2),
- wherein, by way of the flexible elements (FE1, FE2), a coupling or connection of the coupling bodies (KUPK13,
- KUPK23) and the intermediate body (ZWK2) takes place in such a way that a rotational movement of one of the two drive sides (ANT1, ANT2) is transmitted via the coupled elements to the other drive side (ANT2, ANT1).

## Revendications

1. Transmission (ANT) d'un véhicule ferroviaire avec un premier et un deuxième côté d'entraînement (ANT1, ANT2) et avec un dispositif pour la liaison du premier et du deuxième côté d'entraînement (ANT1, ANT2),
- dans laquelle le premier côté d'entraînement (ANT1) présente, à une de ses extrémités (END1), un premier corps de couplage (KUPK11, KUPK13) en forme de disque,
- dans laquelle le deuxième côté d'entraînement (ANT2) présente, à une de ses extrémités (END2), un deuxième corps de couplage (KUPK21, KUPK23) en forme de disque,
- dans laquelle, entre le premier corps de couplage (KUPK11, KUPK13) et le deuxième corps de couplage (KUPK21, KUPK23), est disposé un corps intermédiaire (ZWK1, ZWK2) en forme de disque,
- dans laquelle le corps intermédiaire (ZWK1, ZWK2) est couplé avec le premier corps de couplage (KUPK11, KUPK13) ainsi qu'avec le deuxième corps de couplage (KUPK21, KUPK23) de sorte qu'un mouvement de rotation d'un des deux côtés d'entraînement (ANT1, ANT2) est transmis, par l'intermédiaire des corps (KUPK11, ZWK1, KUPK21, KUPK13, ZWK2, KUPK23) couplés, à l'autre côté d'entraînement (ANT2, ANT1),
- dans laquelle le premier corps de couplage (KUPK11, KUPK13) entoure de manière annulaire le deuxième corps de couplage (KUPK21, KUPK23),
- dans laquelle le corps intermédiaire (ZWK1, ZWK2) entoure de manière annulaire le deuxième corps de couplage (KUPK21, KUPK23),
- de sorte que le deuxième corps de couplage (KUPK21, KUPK23) est disposé de manière imbriquée avec le premier corps de couplage (KUPK11, KUPK13) ainsi qu'avec corps intermédiaire (ZWK1, ZWK2), de façon à limiter l'encombrement, et ces corps présentent un axe de symétrie commun.

2. Transmission selon la revendication 1, dans laquelle, dans la disposition,
- le premier corps de couplage (KUPK11) entoure de manière annulaire le corps intermédiaire (ZWK1).

3. Transmission selon la revendication 1 ou 2, dans laquelle, dans la disposition, les corps de couplage (KUPK11, KUPK21) et le corps intermédiaire (ZWK1) sont couplés entre eux par des picots (MNN) et des évidements (AUS) engrenés les uns dans les autres.

4. Transmission selon la revendication 3, dans laquelle, dans la disposition,
- le premier corps de couplage (KUPK11) présente, sur le côté orienté vers le corps intermédiaire (ZWK1), des picots d'entraînement (MNN1),
- le deuxième corps de couplage (KUPK21) présente, sur un côté orienté vers le corps intermédiaire (ZWK1), des picots d'entraînement (MNN2),
- le corps intermédiaire (ZWK1) présente, sur un côté orienté vers le premier corps de couplage (KUPK11), des évidements (AUS1) qui sont conçus pour le logement des picots d'entraînement (MNN1) du premier corps de couplage (KUPK11),
- le corps intermédiaire (ZWK1) présente, sur un côté orienté vers le deuxième corps de couplage (KUPK21), des évidements (AUS2) qui sont conçus pour le logement des picots d'entraînement (MNN2) du deuxième corps de couplage (KUPK21),
- les picots d'entraînement (MNN) et les évidements (AUS) correspondants sont couplés entre eux de sorte qu'un mouvement de rotation d'un des deux côtés d'entraînement (ANT1, ANT2) est transmis à l'autre côté d'entraînement (ANT2, ANT1) par l'intermédiaire des picots d'entraînement (MNN) et des évidements (AUS) couplés.

5. Transmission selon la revendication 4, dans laquelle, dans la disposition, les corps de couplage (KUPK11, KUPK21) et le corps intermédiaire (ZWK1) sont couplés entre eux par l'intermédiaire d'éléments flexibles.

6. Transmission selon la revendication 1, dans laquelle, dans la disposition,
- le corps intermédiaire (ZWK2) est disposé de manière globalement parallèle au premier corps de couplage (KUPK13).

7. Transmission selon la revendication 6, dans laquelle, dans la disposition,
- le premier corps de couplage (KUPK13) est relié avec le corps intermédiaire (ZWK2) par l'intermédiaire d'éléments flexibles (FE1),
- le corps intermédiaire (ZWK2) est relié avec le deuxième corps de couplage (KUPK23) par l'intermédiaire d'éléments flexibles (FE2).

8. Transmission selon la revendication 7, dans laquelle, dans la disposition,
- les éléments flexibles (FE1, FE2) présentent la forme de bandes.

9. Transmission selon la revendication 7 ou 8, dans laquelle, dans la disposition,
- le premier corps de couplage (KUPK13) et le corps intermédiaire (ZWK2) présentent, de manière annulaire sur la circonférence, des évidements pour le logement des éléments flexibles (FE1), grâce auxquels le premier corps de couplage (KUPK13) est relié avec le corps intermédiaire (ZWK2) et
- le deuxième corps de couplage (KUPK23) et le corps intermédiaire (ZWK2) présentent, de manière annulaire sur la circonférence, des évidements pour le logement des éléments flexibles (FE2), grâce auxquels le deuxième corps de couplage (KUPK23) est relié avec le corps intermédiaire (ZWK2),
- grâce aux éléments flexibles (FE1, FE2) un couplage ou une liaison des corps de couplage (KUPK13, KUPK23) et du corps intermédiaire (ZWK2) est établi de sorte qu'un mouvement de rotation d'un des deux côtés d'entraînement (ANT1, ANT2) est transmis à l'autre côté d'entraînement (ANT2, ANT1) par l'intermédiaire des éléments couplés.
